Europäisches Patentamt

European Patent Office

Office européen des brevets

(11) Veröffentlichungsnummer: **0 071 776**
A1

(19)

(12) # EUROPÄISCHE PATENTANMELDUNG

(21) Anmeldenummer: 82106198.3

(22) Anmeldetag: 10.07.82

(51) Int. Cl.³: **F 02 B 19/10**, F 02 B 19/14, F 02 M 69/10, F 02 B 75/02

(30) Priorität: 30.07.81 DE 3130111
07.08.81 DE 3131266
10.10.81 DE 3140293

(43) Veröffentlichungstag der Anmeldung: 16.02.83
Patentblatt 83/7

(84) Benannte Vertragsstaaten: AT CH FR IT LI

(71) Anmelder: Sachs-Systemtechnik GmbH,
Johann-Georg-Gademann-Strasse 13,
D-8720 Schweinfurt (DE)

(72) Erfinder: Fend, Fritz M., Thurmayerstrasse 11,
D-8400 Regensburg (DE)

(74) Vertreter: Graf, Helmut, Dipl.-Ing. et al, Greflinger
Strasse 7 Postfach 382, D-8400 Regensburg (DE)

(54) **Zweitakt-Brennkraftmaschine.**

(57) Die Erfindung bezieht sich auf eine Zweitakt-Brennkraftmaschine, insbes. Zweitakt-Motor mit wenigstens einem an einem Ende durch einen Zylinderkopf verschlossenen Zylinder, mit einem im Zylinder gleitenden Kolben, der zusammen mit Innenflächen des Zylinders und des Zylinderkopfes einen Zylinderinnenraum mit veränderlichem Volumen bildet, mit wenigstens einem Einlaßkanal in den Zylinderinnenraum, mit wenigstens einem Auslaßkanal aus dem Zylinderinnenraum, wobei Einlaß- und Auslaßkanal durch den sich auf den Zylinderkopf zu bewegenden Kolben geschlossen werden, mit wenigstens einer ersten Funkenstrecke im Zylinderinnenraum sowie mit wenigstens einer ersten Einspritzdüse, die eine in den Zylinderinnenraum mündende Auslaßöffnung besitzt sowie mit einer Kraftstoffeinspritzeinrichtung, z. B. mit einer Kraftstoffpumpe in Verbindung steht.

Das Wesentliche der Erfindung besteht dabei darin, daß die Kraftstoffeinspritzeinrichtung so gesteuert ist, daß unmittelbar nach dem Schließen des Auslaßkanals und des Einlaßkanals Kraftstoff durch die Einspritzdüse in den Zylinderinnenraum eingespritzt wird.

Zweitakt-Brennkraftmaschine

Die Erfindung bezieht sich auf eine Zweitakt-Brennkraftmaschine, insbes. Zweitakt-Motor, mit wenigstens einem an einem Ende durch einen Zylinderkopf verschlossenen Zylinder, mit einem im Zylinder gleitenden Kolben, der zusammen mit Innenflächen des Zylinders und des Zylinderkopfes einen Zylinderinnenraum mit veränderlichem Volumen bildet, mit wenigstens einem Einlaßkanal in den Zylinderinnenraum, mit wenigstens einem Auslaßkanal aus dem Zylinderinnenraum, wobei Einlaß-und Auslaßkanal durch den sich auf den Zylinderkopf zu-bewegenden Kolben geschlossen werden, mit wenigstens einer ersten Funkenstrecke im Zylinderinnenraum sowie mitwenigstens einer ersten Einspritzdüse, die eine in den Zylinderinnenraum mündende Auslaßöffnung be-sitzt sowie miteiner Kraftstoffeinspritzeinrichtung, z.B. mit einer Kraftstoffpumpe in Verbindung steht.

Zweitakt-Brennkraftmaschinen bzw. Zweitakt-Motoren zeichnen sich durch eine einfache und robuste Konstruktion aus. Der wesentliche Nachteil herkömmlicher Zweitakt-Brennkraftmaschinen besteht jedoch darin, daß die Spülung des Zylinderinnenraumes bzw. des Arbeitsraums durch das Luft-Kraftstoff-Gemisch erfolgt, so daß die Auspuff- bzw. Abgase eines solchen Motors einen ganz erheblichen Anteil an nichtverbrannten Kraftstoff enthalten, was zu einer hohen Umweltbelastung sowie zu einem unnötig hohen Kraftstoff-verbrauch führt.

Ein weiterer wesentlicher Nachteil besteht bei herkömmlichen Zweitakt-Motoren darin, daß die Menge des Luft-Kraftstoff-Gemisches, die dem Arbeitsraum durch den Einlaßkanal zuge-führt wird, von der Leistungseinstellung des Motors abhängig ist. Dies bedeutet, daß die maximale Kompression bzw. der maximale Füllgrad von der jeweils eingestellten Motorleistung abhängig sind. Bei geringer Motorleistung (im Teillastbetrieb) ist der Füllgrad niedrig. Da jedoch der thermische Wirkungsgrad eines Motors vom Füllgrad abhängig ist und sich mit sinkendem Füllgrad stark verschlechtert, besitzen bekannte Zweitakt-Motoren im Teillastbetrieb einen ausgesprochen schlechten thermischen Wirkungsgrad, der wiederum zu einem erhöhten Kraftstoffverbrauch sowie zu einer erhöhten Schadstoffemission an die Umgebung führt.

Die Nachteile, die sich aus der Spülung des Arbeitsraumes mit dem Luft-Kraftstoff-Gemisch ergeben bzw. die auf den geringen Füllgrad im Teillastbetrieb zurückzuführen sind, könnten bei einem Zweitakt-Motor grundsätzlich dadurch vermieden werden, daß über den Einlaßkanal nicht ein Luft-Kraftstoff-Gemsich, welches zuvor in einem Vergaser oder in einer anderenEinrichtung aufbereitet wurde, sondern ausschließlich Luft angesaugt wird, während der Kraftstoff mit einer Einspritzdüse, die mit einer Kraftstoff-Einspritzeinrichtung, z.B. mit einer Kraftstoffpumpe in Verbindung steht, in den Zylinderinnenraum eingesprüht bzw. eingespritzt wird, wie dies bei Dieselmotoren üblich ist. Die bei Dieselmotoren verwendeten und mit hohem Druck arbeitenden Kraftstoffpumpen weisen jedoch eine aufwendige und teuere Konstruktion auf, so daß diese Pumpen schon aus preislichen Gründen bei einem Zweitakt-Motor nicht verwendet werden können; andernfalls würde dieser Motor seine preislichen und konstruktiven Vorteile gegenüber einem Viertakt-Motor einbüßen.

Aufgabe der Erfindung ist es, eine Zweitakt-Brennkraftmaschine aufzuzeigen, die bei einfacher konstruktiver Ausbildung die Nachteile bekannter Zweitakt-Brennkraftmaschinen hinsichtlich der Wirkungsgradeinbußen im Teillastbetrieb sowie vor allem auch

- 3 -

hinsichtlich der Spülung des Zylinderinnenraumes mit dem
Luft-Kraftstoff-Gemisch und damit eine erhöhte Umweltbelastung sowie einen unnötig hohen Kraftstoffverbrauch
vermeidet.

Zur Lösung dieser Aufgabe ist eine Zweitakt-Brennkraftmaschine der eingangs geschilderten Art erfindungsgemäß
so ausgebildet, daß die Kraftstoffeinspritzeinrichtung
so gesteuert ist, daß unmittelbar nach dem Schließen
des Auslaßkanals und des Einlaßkanals Kraftstoff durch
die Einspritzdüse in den Zylinderinnenraum eingespritzt
wird, bzw. so ausgebildet, daß die Kraftstoffeinspritzeinrichtung  so gesteuert ist, daß bereits unmittelbar
vor dem endgültigen Schließen des Auslaßkanals sowie
des Einlaßkanals mit dem Einspritzen des Kraftstoffes
durch die Einspritzdüse in den Zylinderinnenraum begonnen
wird.

In di-esem Zusammenhang bedeutet "unmittelbar vor dem
endgültigen Schließen des Auslaßkanales" insbesondere,
daß mit dem Einspritzen des Kraftstoffes in den Zylinderinnenraum frühestens dann begonnen wird, wenn der in diesem
Innenraum angeordnete Kolben sich aus seiner untersten Stellung in Richtung auf den Zylinderkopf zubewegen beginnt.
Die unterste Stellung ist dabei diejenige Stellung, in der
der Kolben den größten Abstand von dem Zylinderkopf aufweist.

Die Leistung der erfindungsgemäßen Zweitakt-Brennkraftmaschine
kann grundsätzlich durch Änderung der über die erste Einspritzdüse eingespritzten Kraftstoffmenge erfolgen, während
die über den Einlaßkanal in den Zylinderinnenraum bzw. Arbeits-

- 4 -

raum gelangende Luftmenge und damit der Füllgrad/der sowie maximale Kompressionsdruck unabhängig von der Leistungseinstellung sind. Dies führt auch im Teillastbetrieb zu einem wesentlich verbesserten thermischen Wirkungsgrad.

Durch die Verwendung einer Einspritzdüse ist es weiterhin möglich, zur Spülung des Zylinderinnenraumes ausschließlich nur Luft zu verwenden, wodurch der Anteil an nicht verbranntem Kraftstoff in den Abgasen der Zweitakt-Brennkraftmaschine erheblich/duziert wird. Dies führt dann ebenfalls zu einem verbesserten Wirkungsgrad sowie zu einer Reduzierung der Umweltbelastung.

Da das Einspritzen des Kraftstoffes bei der erfindungsge- mäßen Zweitakt-Brennkraftmaschine entweder dann erfolgt, wenn Auslaßkanal und Einlaßkanal durch den Kolben gerade geschlossen sind, oder aber kurz vor dem Schließen erfolgt, ist zum Zeitpunkt des Einspritzens des Kraftstoffes im Arbeitsraum noch keine merkliche Kompression vorhanden, d.h. zum Einspritzen des Kraftstoffes kann eine Kraftstoff- Einspritzeinrichtung mit geringer Leistung Verwendung finden, die (Kraftstoffeinspritzeinrichtung) preiswert herstellbar ist und auch hinsichtlich ihrer Betriebssicherheit keine Probleme aufwirft.

Durch das Einspritzen des Kraftstoffes vor dem endgültigen Schließen von Einlaß-und Auslaßkanal bzw. unmittelbar nach diese-m Schließen ist weiterhin sichergestellt, daß genügend Zeit für eine Verm-ischung des Kraftstoffes mit der im Zylinderinnenraum vorhandenen Luft verbleibt, bevor die Zündung des Luft-Kraftstoff-Gemisches durch die erste Funkenstrecke erfolgt.

Das Einsprühen des Kraftstoffes durch die erste Einspritzdüse erfolgt bei der erfindungsgemäßen Zweitakt-Brennkraftmaschine vorzugsweise in unmittelbarer Nähe der ersten
Funkenstrecke, und dabei beispielsweise so, daß im Zeitpunkt des Zündens die Kraftstoffkonzentration im Luft-
Kraftstoff-Gemisch im Bereich der Funkenstrecke sehr hoch
ist, d.h. dort ein fettes, zündfähiges Gemisch vorliegt,
während ansonsten das Gemisch im Zylinderinnenraum mager ist
und für sich alleine gerade noch oder aber nicht mehr zündfähig ist, wobei jedoch das gesamte Gemisch durch die Funkenstrecke gezündet werden kann. Insgesamt ergibt sich hierdurch
ein "Schichtladeeffekt", d.h. der Kraftstoffanteil im Gemisch
steigt in Richtung von Kolben zur Funke-nstrecke hin an; auch dieser
Schichtladeeffekt führt zu einer optimalen Verbrennung und
damit zu einer optimalen Ausnutzung des Kraftstoffes. Besonders
ausgeprägt ist dieser Schichtladeeffekt dann, wenn zusätzlich
zu dem eigentlichen Arbeitsraum, in welchem sich der Kolben
hin- und herbewegt, ein Nebenraum vorgesehen ist, der zusammen
mit dem Arbeitsraum den Zylinderinnenraum bildet und in dem
dann die Funkenstrecke sowie die Einspritzdüse bzw. deren
Auslaßöffnung angeordnet sind.

In den Nebenraum, der mit dem Arbeitsraum durch eine Öffnung
verbunden ist, wird durch den Kolben die angesaugte Luft gedrückt, die sich dann mit dem eingespritzten Kraftstoff sehr
innig zu einem Luft-Kraftstoff-Gemisch verbindet bzw. vermischt, wobei ein Teil dieses Gemisches durch die Öffnung
auch in den Arbeitsraum gelangt. Auch hier kann die Kraftstoffkonzentration wieder so gewählt werden, daß sich im Nebenraum ein fettes, zündfähiges Gemisch einstellt, während ansonsten das Gemisch im Arbeitsraum mager und für sich alleine gerade noch oder aber nicht mehrzündfähig ist, das gesamte Gemisch jedoch durch die Funkenstrecke im Nebenraum gezündet werden kann.

Bei einer speziellen Ausführung ist der im Zylinderkopf vorgesehene und vorzugsweise im wesentlichen als flachgedrückte Kugel oder als Ellipsoid geformte Nebenraum so ausgebildet, daß er mit seiner größten Querschnittsabmessung senkrecht zur Achse der Öffnung liegt, die den Nebenraum und den Arbeitsraum verbindet. Die Achse dieser Öffnung fällt dabei vorzugsweise mit der Achse des Zylinders zusammen oder aber verläuft zumindest parallel zur Achse des Zylinders. Die Öffnung besitzt dabei zumindest an ihrem in den Nebenraum mündenden Ende einen Querschnitt, der kleiner ist als die größere Querschnittsabmessung des Nebenraumes.

Wird im Arbeitsraum vorhandene Luft durch den Kolben in den Nebenraum gedrückt, so ergibt sich dort ein Ringwirbel, der für eine besonders innige Vermischung des Kraftstoffes mit der Luft sorgt. Durch diese besonderen Strömungsverhältnisse wird auch vermieden, daß nicht verdampfter, d.h. noch flüssiger Kraftstoff aus dem Nebenraum in den Arbeitsraum gelangen kann.

Bei einer bevorzugten Ausführungsform der erfindungsgemäßen Zweitakt-Brennkraftmaschine ist der Nebenraum so geformt, daß dessen Innenfläche eine Rinne bildet, die das in den Nebenraummündende Ende der Öffnung umgibt, so daß beim Einspritzen ev. nicht verdampfter Kraftstoff von dieser Rinne aufgefangen bzw. in dieser Rinne gesammelt wird und damit nicht in den Arbeitsraum gelangen kann. Die genannte Rinne ist im einfachsten Fall dadurch gebildet, daß die Innenfläche des Nebenraumes derart konkav gewölbt ist, daß sie in einem die Öffnung umgebenden Teilbereich zu dem dieser Öffnung gegenüberliegenden Teilberich der Innenfläche des Nebenraumes wieder ansteigt, so daß die Innenfläche des Nebenraumes im Bereich der Öffnung kraterförmig ausgebildet ist. Durch diese Rinne bzw. durch die entsprechende Ausbildng der Innenfläche des Nebenraumes wird auch die Ringwirbelbildung für die Luft im Nebenraum noch verbessert. Eine weitere Verbesserung der Ringwirbelbildung kann dadurch erreicht werden, daß der der Öffnung gegenüberliegende Teilbereich der Innenfläche des Nebenraumes von der Mantelfläche eines in den Nebenraum hineinragenden, in etwa kegelförmig ausgebildeten Vorsprungs gebildet ist, wobei dann dieser Vorsprung mit seiner Achse vorzugsweise nicht nur achsgleich mit der Achse der Öffnung, sondern vorzugsweise gleichzeitig auch achsgleich mit der Achse des Zylinders liegt. Eine Anordnung der Öffnung bzw. deren Achse achsgleich mit der Achse des Zylinders sowie eine Ausbildung des Nebenraumes in der Form, daß dessen Symmetrieachse ebenfalls achsgleich mit der Achse des Zylinders liegt, haben den Vorteil, daß beim Zünden des Luft-Kraftstoff-Gemisches die hierbei erzeugte Kraftwirkung auf die Mitte des Kolbens einwirkt, so daß Kraftkomponenten vermieden werden, die den Kolben um eine Achse zu kippen versuchen, die senkrecht oder quer zur Zylinderachse verläuft.

Der eingesprühte Kraftstoff trifft bei der erfindungsgemäßen Zweitakt-Brennkraftmaschine grundsätzlich auf einen im Betrieb erwärmten Wandabschnitt oder auf einen Teilbereich dieses Wandabschnitts, so daß der Kraftstoff dort sofort verdampft. Damit

0071776

dieser Wandabschnitt bereits kurz nach dem Starten der Zweitakt-Brennkraftmaschine eine genügend hohe Temperatur aufweist, ist dieser Wandabschnitt so befestigt, daß er oder ein Teilbereich hiervon einen Abstand von den Innenflächen des Zylinderinnenraumes, d.h. des Arbeitsraumes oder des Nebenraumes aufweist. Hierdurch wird die Wärme vom Wandabschnitt bzw. des/Teilbereich nur verzögert an den Zylinderblock bzw. Zylinderkopf der Brennkraftmaschine abgegeben. Der erwähnte Wandabschnitt ist beispielsweise von einem Element gebildet, welches zumindest mit einem Teilbereich in den Zylinderinnenraum frei hineinreicht. Im einfachsten Fall ist dieses Element ein Metallblech oder eine Metallfahne, die dann beispielsweise an einem Ende an der Innenfläche des Zylinderinnenraumes (Arbeitsraum oder Nebenraum) befestigt ist.

Durch die Verwendung eines Nebenraumes wird bei der erfindungsgemäßen Zweitakt-Brennkraftmaschine auch erreicht, daß zumindest am Beginn des Einspritzvorganges nur geringe Mengen an verdampftem Kraftstoff in den Arbeitsraum gelangen, so daß auch bei noch nicht endgültig geschlossenem Auslaßkanal kein Kraftstoff oder aber nur eine vernachläßigbar geringe Menge an Kraftstoff durch den Auslaßkanal in unverbrannter Form abgeführt werden kann. Ein weiterer Vorteil des Nebenraumes besteht darin, daß auch nach erfolger Spülung unter Umständen in diesem Nebenraum ein Rest an verbrannten Gasen verbleibt. Es hat sich gezeigt, daß hiedurch die Klopffestigkeit der Zweitakt-Brennkraftmaschine wesentlich erhöht werden kann.

Um auch bei extrem ungünstigen Betriebsbedingungen, z.B. bei einem Kaltstart oder aber einem zu fetten Gemisch im Nebenraum und einem zündfähigenGemisch im Arbeitsraum ein einwandfreies Zünden des Gemisches sicherzustellen, ist bei einer weiteren, bevorzugten Ausführungsform der Erfindung eine zusätzliche (zweite) Funkenstrecke im Arbeitsraum vorgesehen, die dann vorzugsweise elektrisch parallel zur ersten Funkenstrecke geschaltet ist.

Anstelle der ersten und/oder zweiten Einspritzdüse kann selbstverständlich auch eine Düsenanordnung zur Anwendung kommen, die mehrere Einzeldüsen bzw. mehrere Auslaßöffnungen aufweist.

Die erfindungsgemäße Zweitakt-Brennkraftmaschine wird beispielsweise so betrieben, daß dem Zylinderinnenraum über den Einlaßkanal ausschließlich Luft zugeführt wird. Insbesonder-e für einen Dauerbetrieb bei höherer Leistung, z.B. beim Fahren eines mit der erfindungsgemäßen Brennkraftmaschine angetriebenen Fahrzeugs mit höherer Geschwindigkeit außerhalb von Ortschaften ist es möglich, dem Einlaßkanal ein Luft-Kraftstoff-Gemisch zuzuführen, welches zuvor in einem Vergaser oder aber in einer anderen Einrichtung aufbereitet wurde, wobei dann beispielsweise Mittel vorgesehen sind, um den Kraftstoff wahlweise über die erste Einspritzdüse oder aber über den Einlaßkanal in Form des Luft-Kraftstoff-Gemisches zuzuführen.

Weiterbildungen der Erfindung sind Gegenstand der Unteransprüche.

Die Erfindung wird im folgenden anhand der Figuren an einem Ausführungsbeispiel näher erläutert. Es zeigen:

- 10 -

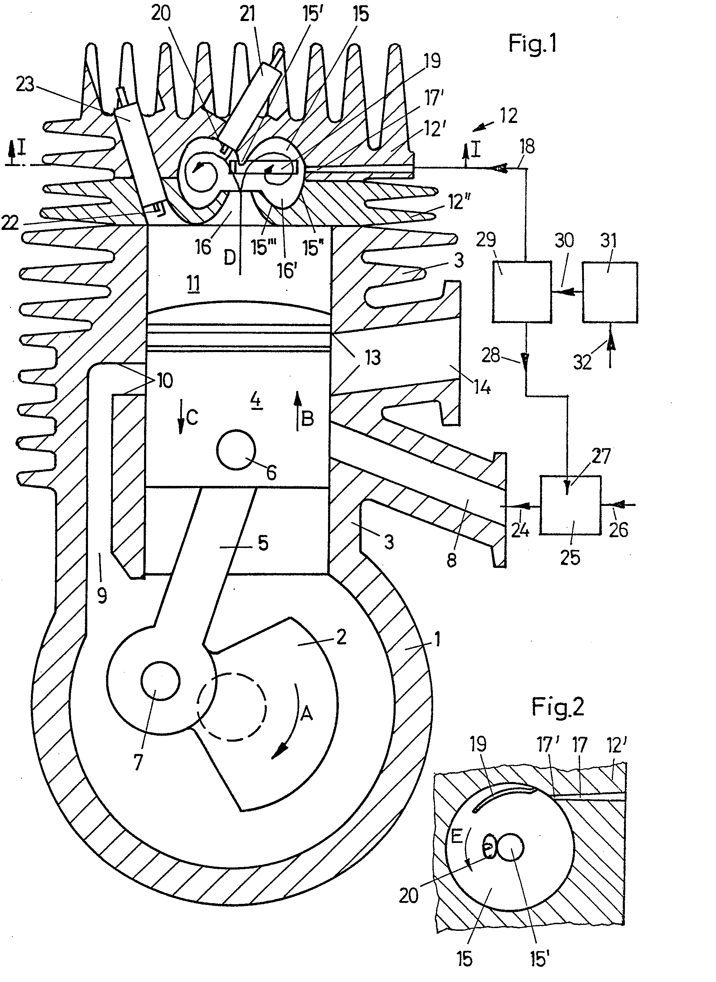

Fig. 1 im Schnitt eine Brennkraftmaschine in Form eines
Zweitakt-Motors gemäß der Erfindung mit einem einzigen
Zylinder, wobei der Kolben in derjenigen Stellung
gezeigt ist, bei d-er der Einlaßkanal sowie der Auslaßkanal gerade geschlossen sind und wobei die äußeren
Anschlußelemente an den Motor zum Zuführen von Luft
und Kraftstoff in Form eines Blockdiagramms wiedergegeben sind;

Fig. 2 in Teildarstellung einen Schnitt durch den Zylinderkopfdeckel entsprechend der Linie I-I der Fig. 1

Der in den Figuren dargestellte Zweitakt-Motor besteht
in bekannter Weise aus einem gasdicht verschlossenen Kurbelgehäuse 1, in welchem die Kurbelwelle 2 um eine senkrecht zur
Zeichenebene der Fig. 1 verlaufende Achse drehbar gelagert ist,
aus dem sich an das Kurbelgehäuse 1 anschließenden Zylinderblock bzw. Zylinder 3 sowie aus dem im Zylinder 3 verschiebbar bzw. gleitend geführten Kolben 4. Der Kolben 4 ist über
die Kolben- bzw. Pleuelstange 5 sowie über die beiden Lager
6 und 7 an den beiden Enden der Pleuelstange mit der Kurbelwelle 2 verbunden. Am Kurbelgehäuse 1 sind ein Einlaß 8 sowie
ein Überströmkanal 9 vorgesehen, welch letzterer über eine
Öffnung 10 dann mit dem Innenraum 11 des Zylinders 3 bzw.
mit dem Arbeitsraum in Verbindung steht, wenn sich der
Kolben 4 bei der für die Fig. 1 gewählten Darstellung im
Bereich seiner untersten Stellung befindet, d.h. im Bereich
derjenigen Stellung, in der der Kolben 4 den größten Abstand
vom Zylinderkopfdeckel 12 aufweist. Die in der Seitenwandung des Zylinders 3 vorgesehene Öffnung 10 bzw. der Überströmkanal 9 bilden den Einlaßkanal in den Arbeitsraum
bzw. Innenraum des Zweitakt-Motors. Bei der in den Figuren
dargestellten Ausführungsform ist der Öffnung 10 gegenüberliegend und ebenfalls an der Umfangswand des Zylinders 3 eine
Öffnung 13 eines Auslaßkanales 14 vorgesehen, der zum Abführen der verbrannten Gase aus dem Zweitakt-Motor dient
und an die nicht näher dargestellte Auspuffanlage angeschlossen ist. Auch der Auslaßkanal 14 steht über die Öffnung 13
mit dem Innenraum 11 bzw. mit dem Arbeitsraum des Zweitakt-
Motors in Verbindung, wenn sich der Kolben 4 bei der für
die Fig. 1 gewählten Darstellung im Bereich seiner untersten
Stellung befindet.

Der Zylinderkopfdeckel 12 ist mit üblichen Mitteln (Schraubbolzen usw.) unter Verwendung einer Dichtung abgedichtet an
dem dem Kurbelgehäuse 1 abgewandten Ende des Zylinders 3 befestigt und verschließt somit den Innenraum 11 zu diesem
Ende des Zylinders 3 hin.

In dem Zylinderkopfdeckel 12 ist ein Nebenraum 15 eingebracht,
der bei der in den Figuren dargestellten Ausführungsform bezüglich der Achse des Zylinders 3 rotationssymmetrisch ausgeführt ist, wobei diese Symmetrieachse mit der Achse des Zylinders
3 zusammenfällt. Der Nebenraum 15 steht über ein Öffnung 16
mit dem Arbeitsraum bzw. dem Innenraum 11 in Verbindung, wobei
diese Öffnung 16 ebenfalls rotationssymmetrisch zur Achse des
Zylinders 3 ausgebildet ist und die. Symmetrieachse der Öffnung 16 sowohl mit der Symmetrieachse des Nebenraumes 15 als
auch mit der Achse des Zylinders 3 zusammenfällt. Die Öffnung
16 ist weiterhin so ausgeführt, daß sich ihr Querschnitt vom Nebenraum 15 her zum Innenraum 11 hin erweitert, wobei der Querschn-itt der Öffnung 16 zumindest an dem in den Nebenraum 15 mündenden Ende dieser Öffnung kleiner ist als der maximale Querschnitt, den der Nebenraum 15 in Richtung senkrecht zur Achse des Zylinders 3 aufweist.

Wie die Fig. 1 zeigt, ist der Nebenraum 15 so geformt, daß dessen Innenfläche an ihrem der Öffnung 16 gegenüberliegenden Teilbereich einen in den Nebenraum 15 hineinragenden Vorsprung 15' bildet, der in etwa die Form eines rotationssymmetrischen Kegels mit abgerundeter Spitze sowie mit konkav gewölbter Mantelfläche aufweist. Der Vorsprung 15' ist rotationssymmetrisch zur Symmetrieachse des Nebenraumes 15 ausgebildet, wobei bei der dargestellten Ausführungsform die Symmetrie-achse des Vorsprunges 15'/nicht nur mit der Symmetrieachse des Nebenraumes 15 sowie der Öffnung 16 zusammenfällt, sondern auch mit der Achse des Zylinders 3. Die Mantelfläche des Vorsprunges 15' bzw. der von dieser Mantelfläche gebildete Teilbereich der Innenfläche des Nebenraums 15 geht über in einen ebenfalls konkav gewölbten, ringförmigen Teilbereich 15" dieser Innen-fläche der dann an der dem Vorsprung 15' gegenüberliegenden Seite in die Öffnung 16 bzw. deren Wandung übergeht. Die Innenfläche des Nebenraumes 15 ist an dieser Übergangsstelle zur Öffnung 16 . ., d.h. im Teilbereich 15"' so ausgebildet, daß sie in diesem Teilbereich wieder in das Innere des Nebenraumes 15 geführt ist bzw. zum Vorsprung 15' hin ansteigt, bevor die Innenfläche des Nebenraumes 15 in die Öffnung 16 übergeht. Durch diesen ansteigenden Teilbereich 15"', welcher ebenfalls konkav gewölbt ist, wird im Nebenraum 15 eine die Öffnung 16 umgebende ringförmige Nut oder Rinne 16' gebildet, deren Bodenfläche tiefer, d.h. dem Innenraum 11 näher liegt als das in den Nebenraum 15 mündende obere Ende der Öffnung 16. Durch die beschriebene Ausbildung weist der Nebenraum in etwa die Form eines flachgedrückten, kugelförmigen Körpers auf, der zusätzlich an seiner Oberseite (im Bereich des Vorsprunges 15') nach innen gedrückt ist, bzw. bildet der Nebenraum 15 zusammen mit der Öffnung 16 einen in etwa pilzartigen Hohlraum im Zylinderkopf 12.

Durch die beschriebene Ausbildung des Hohlraumes 15 werden besonders günstige Strömungsverhältnisse erreicht, d.h. während des Motorbetriebs wird in der Verdichtungsphase Luft durch die Öffnung 16 in den Nebenraum 15 gedrückt, wo sich dann entsprechend dem Pfeil D (aufgrund des Vorsprunges 15' sowie aufgrund des Verlaufes der Innenfläche des Nebenraumes 15 in den Teilbereichen 15" und 15"' )ein Ringwirbel für die Luft ergibt, der zu einer innigen Vermischung von Luft und Kraftstoff im Nebenraum 15 führt.

Durch die Rinne 16' ist gleichzeitig sichergestellt, daß insbesondere bei noch kaltem Motor ein evtl. nicht verdampfter Anteil des Kraftstoffes, der durch einen düsenförmigen Kanal 17 in den Nebenraum 15 eingespritzt bzw. eingesprüht wird, im Nebenraum 15 bzw. in der die Öffnung 16 umgebenden Rinne 16' verbleibt.

Der in den Nebenraum 15 über die Auslaßöffnung 17' mündende düsenförmige Kanal 17 ist mit einer Leitung 18, die in der Fig. 1 nur schematisch dargestellt ist, verbunden, über welche der Kraftstoff zugeführt wird, den eine Kraftstoffeinspritzeinrichtung 31 (z.B. Kraftstoffpumpe) liefert. Mit Hilfe des düsenförmigen Kanals 17 wird der Kraftstoff bei der dargestellten Ausführungsform von der Seite her in den Nebenraum 15 eingespritzt. Da der düsenförmige Kanal 17 so angeordnet ist, daß dessen Achse insbesondere auch an der Austrittsöffnung in etwa tangential zu dem in der Fig. 2 gezeigten Querschnitt des Nebenraumes 15 liegt bzw. die Randlinie dieses Querschnitts nach Art einer Sekante schneidet, wird für den auf der Austrittsöffnung 17' austretenden Kraftstoff eine Verwirbelung nach Art eines Ringwirbels um die Symmetrieachse des Nebenraumes 15 erreicht, wie dies in der Fig. 2 mit dem Pfeil E angedeutet ist. Der aus dem Kanal 17 austretende Kraftstoff trifft auf die Innenfläche des Nebenraumes 15, die während des Betriebes des Motors eine erhebliche Temperatur aufweist und verdampft dadurch vollständig. Um die Verdampfung des Kraftstoffes auch bei noch relativ niedrigen Motortemperaturen zu verbessern, ist an der Innenfläche des Nebenraumes 15 ein Element 19 derart befestigt, daß dieses Element mit einem Teilbereich frei in den Nebenraum 19 hineinreicht und an diesem Teilbereich eine der Austrittsöffnung 17' zugewendete Fläche bildet, wobei diese Fläche schräg zur Achse des Kanales 17 liegt. Der in den Nebenraum 15 frei hineinragende Teilbereich des Elementes 19 weist auch bei niedriger Motorleistung bzw. bei niedrigen Motortemperaturen eine relativ hohe Temperatur auf und sorgt dadurch für eine beschleunigte Verdampfung des eingespritzten Kraftstoffes. Das Element 19 besteht im einfachsten Fall aus einer Metallblechfahne.

Bei der dargestellten Ausführungsform liegt die von den Elektroden 20 der Zündkerze 21 gebildete Funkenstrecke dem freien Ende des Elementes 19 näher als die Auslaßöffnung 17' des Kanales 17, wobei es vorteilhaft sein kann, die erwähnte Funkenstrecke gegen eine direkte Besprühung mit Kraftstoff dadurch zu schützen, daß sie an der der Auslaßöffnung 17' abgewandten Seite des Vorsprunges 15' angeordnet ist.

Zur Herstellung des Nebenraumes 15 ist der Zylinderkopfdeckel 12 vorzugsweise zweiteilig ausgeführt, wobei die beiden Teile 12' und 12" des Zylinderkopfdeckels unter Verwendung einer Dichtung mit üblichen Mitteln, z.B. mit Schraubbolzen usw. aneinander dicht befestigt sind. Die Trennebene zwischen den beiden Teilen 12' und 12" liegt senkrecht zur Achse des Zylinders 3 und vorzugsweise dort, wo der Teilbereich 15" in etwa parallel zur Achse des Zylinders 3 verläuft.

Bei der in den Figuren dargestellten Ausführungsform des erfindungsgemäßen Zweitakt-Motors ist außerhalb des Nebenraumes 15 im Arbeits- bzw. Innenraum 12 eine von den Elektroden 22 einer Zündkerze 23 gebildete Hilfsfunkenstrecke vorgesehen, die auch bei geringer Motorleistung bzw. bei geringer Kraftstoffzufuhr durch den Kanal 17 und/oder bei ungünstigen Betriebsverhältnissen (z.B. Kaltstart usw.) eine zuverlässige Zündung des Kraftstoff-Luft-Gemisches im Arbeits- bzw. Innenraum 11 sicherstellt. Die beiden Zündkerzen 21 und 23 bzw. deren Funkenstrecken sind parallel geschaltet.

Bei der in der Fig. 1 dargestellten Ausführungsform des erfindungsgemäßen Zweitakt-Motors ist der Einlaß 8 über die dort schematisch dargestellte Leitung 24 mit einer Kammer 25 verbunden, die ihrerseits über eine Leitung 26 mit einer nicht näher dargestellten Einrichtung zum Ansaugen der Luft (z.B. Luftfilter) in Verbindung steht. In der nach außen hin geschlossenen Kammer 25 ist wenigstens eine Düse 27 angeordnet, mit deren Hilfe Kraftstoff in die Kammer 25 eingesprüht werden kann. Die Düse 27 steht über eine Kraftstoffleitung 28 mit einem Ausgang eines Zwei-Wege-Ventils 29 in Verbindung, an dessen anderem Ausgang die Leitung 18 angeschlossen ist. Der Eingang des Zwei-Wege-Ventils 29 ist mit der Kraftstoffleitung 30 verbunden, die ihrerseits an die Kraftstoff-Einspritzeinrichtung 31 angeschlossen ist, welche über die Leitung 32 mit einem Kraftstoffbehälter in Verbindung steht.

Im normalen Betrieb des Zweitakt-Motors ist das Zwei-Wege-Ventil 29 so geschaltet, daß die Kraftstoffleitung 30 direkt an die Leitung 18 angeschlossen ist, so daß dem Einlaß 8 über die beiden Leitungen 24 und 26 sowie über die Kammer 25 ausschließlich Luft zugeführt wird, während der Kraftstoff ausschließlich an den als Einspritzdüse wirkenden Kanal 17 gelangt. Beim Anlassen des Zweitakt-Motors im kalten Zustand kann es zweckmäßig sein, während der ersten Motorumdrehungen, d.h. bis zum Erreichen einer bestimmten Motortemperatur, das Zwei-Wege-Ventil 29 so einzustellen, daß der Kraftstoff über die Leitung 28 an die Düse 27 gelangt und auf diese Weise in der Kammer 25 in die vom Motor angesaugte Luft eingesprüht wird. Hierdurch wird das Starten des Zweitakt-Motors vereinfacht, der dann in dieser Startphase als normaler Zweitakt-Motor arbeitet. Die Steuerung des Zwei-Wege-Ventils 29 erfolgt entweder von Hand oder aber automatisch, d.h. beispielsweise mit den gleichen oder ähnlichen Mitteln, die heute bei "Startautomatiken" üblich sind.

Selbstverständlich ist es möglich, anstelle eines Zwei-Wege-Ventils, welches nur wahlweise den einen oder den anderen Ausgang freigibt, ein Ventil zu verwenden, mit welchem es möglich ist, den Durchfluß bzw. Durchlaß vom Eingang zu den beiden Ausgängen kontinuierlich, jedoch gegensinnig zu verändern.

Weiterhin ist es selbstverständlich möglich, die Kammer 25 direkt mit dem Einlaß 8 zu verbinden, oder aber den vom Einlaß 8 gebildeten Kanal bzw. Raum als Kammer 25 zu verwenden, d.h. die Düse 27 in diesem Raum anzuordnen.

Schließlich ist es auch möglich, anstelle einer Kammer 25 mit einer Kraftstoffeinspritz-Düse 27 eine als Zwei-Wege-Ventil wirkende Anordnung an den Einlaß 8 anzuschließen, wobei diese Anordnung dann einen einzigen, an den Einlaß 8 angeschlossenen Ausgang und zwei Eingänge aufweist, von denen der eine mit einer Einrichtung zum Zuführen von Luft, z.B. mit einem Luftfilter und der andere mit einer Einrichtung zum Aufbereiten eines Luft-kraftstoff-Gemisches, z.B. mit einem Vergaser verbunden ist. Diese als Zwei-Wege-Ventil wirkende Einrichtung wird dann so gesteuert, daß dem Einlaß 8 bei kaltem Motor ein Kraftstoff-Luft-Gemisch zugeführt wird, während bei laufendem und warmen Motor der Einlaß 8 ausschließlich Luft ansaugt.

Die Arbeitsweise des erfindungsgemäßen Zweitakt-Motors läßt sich, wie folgt, beschreiben:

Beim Anlassen des kalten Motors ist es zweckmäßig, aber nicht unbedingt erforderlich, dem Einlaß 8 ein aufbereitetes L-uft-Kraftstoff-Gemisch zuzuführen, so daß der Motor während der ersten Umdrehungen als herkömmlicher Zweitakt-Motor arbeitet.

Nach dem ersten Anlaufen wird dem erfindungsgemäßen Zweitakt-Motor, im Gegensatz zu bekannten Zweitakt-Motoren, über den Einlaß 8, über den Innenraum des Kurbelgehäuses 1, sowie über den Überströmkanal 9 ausschließlich Luft zugeführt, während der Kraftstoff in der oben beschriebenen Weise durch den Kanal 17 eingesprüht wird, und zwar wird die jeweils eingesprühte bzw. eingespritzte Kraftstoffmenge entsprechend der Motorleistung gesteuert.

Auch bei dem erfindungsgemäßen Zweitakt-Motor vollziehen sich zwei Vorgänge stets gleichzeitig, und zwar der eine über dem Kolben 4 und der andere unter dem Kolben 4, d.h. im Innenraum des Kurbelgehäuses 1.

E r s t e r   Takt:

Der Kolben 4 bewegt sich aus seiner untersten Stellung entsprechend der durch den Pfeil A angegebenen Drehrichtung der Kurbelwelle 2 in Richtung des Pfeiles B aufwärts. Hierdurch verschließt der Kolben die Öffnug 10 des Überströmkanales 9 sowie die Öffnung 13 des Auslaßkanales 14 und öffnet gleichzeitig den Einlaßkanal 8 in den Innenraum des Kurbelgehäuses 1. Unmittelbar nach dem Schließen der Öffnung 10 und 13, d.h. dann, wenn die im Innenraum 11 vorhandene Luft noch nicht komprimiert ist bzw. im Innenraum 11 ein niedriger Druck herrscht, wird der Kraftstoff durch den Kanal 17 eingespritzt. Nach dem Einspritzen des Kraftstoffes und beim weiteren Nachobenbewegen des Kolbens 4 in Richtung des Pfeiles B ergibt sich im Nebenraum 15 ein "fettes" und zündfähiges Luft-Kraftstoff-Gemisch, während ein Teil dieses fetten Gemisches durch die Öffnung 16 auch in den Innenraum 11 des Zylinders 3 gelangt und dort zu einem "mageren" Luft-Kraftstoff-Gemisch
führt, wobei der Kraftstoffanteil in diesem mageren Gemisch
so niedrig sein kann, daß es für sich alleine nicht mehr zündfähig ist.

Das Einsprühen des Kraftstoffes durch den Kanal 17 ist bereits
dann beendet, wenn durch das Aufwärtsbewegen des Kolbens 4 in
Richtung des Pfeiles B im Innenraum 11 sowie im Nebenraum 15
ein erhöhter Druck entsteht. Für die zum Einspritzen des Kraftstoffes dienende Kraftstoffeinspritzeinrichtung bzw. Kraftstoffpumpe ist somit keine hohe Leistung bzw. Druckleistung erforderlich. Der von der Kraftstoffeinspritzeinrichtung bzw. -pumpe
erzeugte Kraftstoffdruck kann wesentlich geringer sein als der
maximale Kompressionsdruck des Zweitakt-Motors. Zum Einspritzen
eignen sich somit bei dem erfindungsgemäßen Zweitakt-Motor
beispielsweise einfache Membranpumpen, wie sie vielfach bei
Viertakt-Otto-Motoren zum Einspritzen des Kraftstoffes in die
Motor-Ansaugleitung verwendet werden.

Mit dem Aufwärtsbewegen des Kolbens 4 in Richtung des Pfeiles
B entsteht unter dem Kolben 4, d.h. im Innenraum des Kurbelgehäuses 1 ein Unterdruck, so daß über den geöffneten Einlaß
8 Luft in den Innenraum des Kurbelgehäuses 1 angesaugt wird.

Z we i t e r   Takt:

'Sobald der Kolben 4 seine oberste Stellung erreicht hat,
bewegt sich dieser Kolben in Richtung des Pfeiles C abwärts.
Über dem Kolben 4, d.h. im Innenraum 11 sowie im Nebenraum
15 wird das dort vorhandene Gemisch durch Funkenbildung an den

- 20 -

Elektroden 20 sowie ggf. 22 gezündet, wobei die Zündung des relativ fetten Gemisches im Nebenraum 15 durch die Öffnung 16 auch zu einer Zündung des Gemisches im Innenraum 11 führt; das gezündete Gemisch treibt den Kolben 20 unter Abgabe von Leistung in Richtung des Pfeiles C nach unten. Unter dem Kolben 4, der kurz danach den Einlaß bzw. Einlaßkanal 8 verschließt, wird die im Inneren des Kurbelgehäuses 1 vorhandene Luft verdichtet. Gegen Ende dieses zweiten Taktes gibt der Kolben 4 die Öffnung 10 des Überströmkanales 9 sowie die Öffnung 13 des Auslaßkanales 14 frei.

Aus dem Kurbelgehäuse 1 strömt Luft in den Innenraum 11 sowie in den Nebenraum 15 und spült die verbrannten Gase durch den Auslaßkanal 14 heraus.

Der Spülvorgang und damit der zweite Takt sind beendet, sobald der Kolben 4 seine unterste Stellung erreicht hat.

Mit dem erneuten Nach-Oben-Bewegen des Kolben 4 in Richtung des Pfeiles B wird dann der oben beschriebene erste Takt wieder eingeleitet.

Die obigen Ausführungen haben gezeigt, daß der erfindungsgemäße Zweitakt-Motor gegenüber herkömmlichen Zweitakt-Motoren erhebliche Vorteile aufweist. So erfolgt während des Betriebes die Spülung des erfindungsgemäßen Zweitakt-Motors ausschließlich mit Luft und nicht mit einem Luft-Kraftstoff-Gemisch, so daß der erfindungsgemäße Zweitakt-Motor umweltfreundlich arbeitet, d.h. bezüglich seiner Abgase einem Viertakt-Motor gleichzusetz-en ist. Auch wenn der Einlaß 8 in der Anlaßphase mit einem Luft-Kraftstoff-Gemisch beaufschlag-t wird, stellt dies keine merkliche Erhöhung der Umweltbelastung dar, da diese Anlaßphase nur wenige Motorumdrehungen dauert.

Weiterhin erfolgt die Steuerung der Motorleistung bei dem erfindungsgemäßen Zweitakt-Motor durch Steuerung der eingespritzten Menge an Kraftstoff, wobei die eingespritzte Kraftstoffmenge grundsätzlich so gering ist, daß nur in dem Nebenraum 15 ein fettes und zündfähiges Kraftstoff-Luft-Gemisch entsteht, während das Gemisch im eigentlichen Arbeitsraum bzw. Innenraum 11 sehr mager gehalten ist (Schichtladeeffekt). Hierdurch erg-ibt sich eine optimale Ausnutzung bzw. Verbrennung des Kraftstoffes.

P a t e n t a n s p r ü c h e
-.-.-.-.-.-.-.-.-.-.-.-.-.-.-.;

1. Zweitakt-Brennkraftmaschine, insbesondere Zweitakt-Motor, mit wenigstens einem an einem Ende durch einen Zylinderkopf verschlossenen Zylinder, mit einem im Zylinder gleitenden Kolben, der zusammen mit Innenflächen des Zylinders und des Zylinderkopfes einen Zylinderinnenraum mit veränderlichem Volumen bildet, mit wenigstens einem Einlaßkanal in den Zylinderinnenraum, mit wenigstens einem Auslaßkanal aus dem Zylinderinnenraum, wobei Einlaß- und Auslaßkanal durch den sich auf den Zylinderkopf zubewegenden Kolben geschlossen werden, mit wenigstens einer ersten Funkenstrecke im Zylinderinnenraum sowie mit wenigstens einer ersten Einspritzdüse, die eine in den Zylinderinnenraum mündende Auslaßöffnung besitzt sowie mit einer Kraftstoffeinspritzeinrichtung, z.B. mit einer Kraftstoffpumpe in Verbindung steht, dadurch gekennzeichnet, daß die Kraftstoffeinspritzeinrichtung (31) so gesteuert ist, daß unmittelbar nach dem Schließen des Auslaßkanals (14) und des Einlaßkanals (8, 9) Kraftstoff durch die Einspritzdüse (17) in den Zylinderinnenraum (11, 15) eingespritzt wird.

2. Zweitakt-Brennkraftmaschine, insbesondere Zweitakt-Motor, mit wenigstens einem an einem Ende durch einen Zylinderkopf verschlossenen Zylinder, mit einem im Zylinder gleitenden Kolben, der zusammen mit den Innenflächen des Zylinders und des Zylinderkopfes einen Zylinderinnenraum mit veränderlichem Volumen bildet, mit wenigstens einem Einlaßkanal in den Zylinderinnenraum, mit wenigstens einem Auslaßkanal aus dem Zylinderinnenraum, wobei Einlaß- und Auslaßkanal durch den sich auf den Zylinderkopf zu bewegenden Kolben geschlossen werden, mit wenigstens einer ersten Funkenstrecke im Zylinderinnenraum, sowie mit wenigstens einer ersten Einspritzdüse, die eine in den Zylinderinnenraum mündende Auslaßöffnung besitzt sowie mit einer Kraftstoffeinspritzeinrichtung, z.B. mit einer Kraftstoffpumpe in Verbindung steht,

- 2 -

dadurch gekennzeichnet, daß die Kraftstoffeinspritzeinrichtung (31) so gesteuert ist, daß bereits unmittelbar vor
dem endgültigen Schließen des Auslaßkanales (14) sowie des
Einlaßkanales (8, 9) mit dem Einspritzen des Kraftstoffes
durch die erste Einspritzdüse (17) in den Zylinderinnenraum
(11, 15) begonnen wird.

3. Zweitakt-Brennkraftmaschine nach Anspruch 1 oder 2, gekennzeichnet durch einen Wandabschnitt (19), der mit wenigstens
einem Teilbereich der Auslaßöffnung (17') der Einspritzdüse (17) gegenüberliegt, wobei dieser Teilbereich des
Wandabschnittes (19) eine der Auslaßöffnung (17') zugewendete
Fläche bildet, die vorzugsweise schräg zu derjenigen Achse
liegt, die die Einspritzdüse (17) an ihrer Auslaßöffnung
(17') aufweist.

4. Zweitakt-Brennkraftmaschine nach Anspruch 3, dadurch gekennzeichnet, daß die erste Funkenstrecke (20) dem erwähnten
Teilbereich des Wandabschnittes (19) näher liegt als die
Auslaßöffnung (17') der ersten Einspritzdüse (17).

5. Zweitakt-Brennkraftmaschine nach Anspruch 3 oder 4, dadurch
gekennzeichnet, daß der erwähnte Teilbereich des Wandabschnittes (19) im Abstand von den den Zylinderinnenraum
(11, 15) begrenzenden Innenflächen angeordnet ist und beispielsweise von einem in den Zylinderinnenraum hineinragenden stift - oder stegförmigen Element (19) gebildet ist.

6. Zweitakt-Brennkraftmaschine nach einem der Ansprüche 1 - 5,
dadurch gekennzeichnet, daß der Zylinderinnenraum von einem
Arbeitsraum (11), in welchem der Kolben (4) gleitet, sowie
von einem mit dem Arbeitsraum (11) in Verbindung stehenden
Nebenraum (15) gebildet ist, daß die erste Funkenstrecke
(20) in dem Nebenraum (15) angeordnet ist, und daß die
erste Einspritzdüse (17) mit ihrer Auslaßöffnung (17') in

- 3 -

den Nebenraum (15) mündet, wobei der Nebenraum (15) vorzugsweise in Richtung quer oder senkrecht zur Achse des Zylinders einen Querschnitt aufweist, der kleiner ist als der Querschnitt des Arbeitsraumes (11).

7. Zweitakt-Brennkraftmaschine nach Anspruch 6, dadurch gekennzeichnet, daß der Nebenraum (15) mit dem Arbeitsraum (11) durch einen Kanal oder eine Öffnung (16) in Verbindung steht, deren Querschnitt zumindest in einem Teilbereich kleiner ist als der Querschnitt des Nebenraumes (15) in Richtung quer oder senkrecht zur Achse dieser Öffnung (16), und daß der Querschnitt des Nebenraumes in Richtung senkrecht oder quer zur Achse der Öffnung (16) vorzugsweise größer ist als der Querschnitt, den der Nebenraum (15) in Richtung der Achse dieser Öffnung (16) aufweist.

8. Zweitakt-Brennkraftmaschine nach Anspruch 7, dadurch gekennzeichnet, daß die Innenfläche des Nebenraumes (15) zumindest in einem Teilbereich (15"') so geformt ist, daß der Nebenraum (15) eine Rinne bildet, die das in den Nebenraum (15) mündende Ende des Kanales bzw. der Öffnung (16) umschließt.

9. Zweitakt-Brennkraftmaschine nach einem der Ansprüche 6 -8, dadurch gekennzeichnet, daß der Nebenraum (15) und/oder der den Nebenraum (15) mit dem Arbeitsraum (11) verbindende Kanal bzw. die entsprechende Öffnung (16) rotationssymmetrisch ausgebildet sind, wobei vorzugsweise die Symmetrieachse des Nebenraumes (15) und/oder des Kanales bzw. der Öffnung (16) achsgleich mit der Achse des Zylinders (3) liegt.

10. Zweitakt- Brennkraftmaschine nach einem der Ansprüche 6 -9, gekennzeichnet durch eine zweite Funkenstrecke (22) im Arbeitsraum.

0071776

- 4 -

11. Zweitakt-Brennkraftmaschine nach einem der Ansprüche 1 - 10, gekennzeichnet durch Mittel zum Zuführen von Luft unter Druck durch den Einlaßkanal (9) in den Zylinderinnenraum (11, 15).

12. Zweitakt-Brennkraftmaschine nach einem der Ansprüche 1- 10, gekennzeichnet durch Mittel zum wahlweisen Zuführen von Luft oder eines Luft-Kraftstoff-Gemisches unter Druck durch den Einlaßkanal (9) in den Zylinderinnenraum (11, 15), wobei diese Mittel eine Einrichtung zum Aufbereiten des Luft-Kraftstoff-Gemisches, z.B. eine zweite Einspritzdüse (27) im Einlaßkanal (9) oder in einem mit diesem Einlaßkanal (9) verbundenen Raum (25) aufweisen, sowie durch eine Steuereinrichtung , z.B. eine Steuerventileinrichtung (29), um wahlweise oder gleichzeitig Kraftstoff über die erste Einspritzdüse (17) oder über den Einlaßkanal (9) in den Zylinderinnenraum (11, 15) einzubringen.

0071776

Fig.1

Fig.2

# 0071776

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | ~~~ | | F 02 B 19/10 |
| A | US-A-2 156 665 (MALLORY) <br> * Seite 1, linke Spalte, Zeile 1 - rechte Spalte, Zeile 50 * | 1,2 | F 02 B 19/14 <br> F 02 M 69/10 <br> F 02 B 75/02 |
| | ~~~ | | |
| A | US-A-3 937 188 (GENERAL MOTORS) <br> * Spalte 3, Zeile 27 - Spalte 4, Zeile 63 * | 1 | |
| | ~~~ | | |
| A | GB-A- 593 663 (HUTTON) <br> * Seite 2, Zeilen 3-103 * | 1,2,10 | |
| | ~~~ | | |
| A | GB-A-2 048 379 (GENERAL MOTORS) <br> * Seite 2, Zeilen 31-130 * | 3 | |
| | ~~~ | | |
| A | DE-A-2 840 367 (DAIMLER BENZ) <br> * Figur 2; Seite 9, Absatz 2 * | 3 | **RECHERCHIERTE SACHGEBIETE (Int. Cl. ³)** |
| | ~~~ | | |
| A | FR-A-2 410 146 (PORSCHE) <br> * Seite 4, Zeilen 1-17 * | 1 | F 02 B <br> F 02 M |
| | ~~~~ | | |

Der vorliegende Recherchenbericht wurde für alle Patentansprüche erstellt.

| Recherchenort | Abschlußdatum der Recherche | Prüfer |
|---|---|---|
| DEN HAAG | 08-11-1982 | WASSENAAR G. |